# EUROPEAN PATENT APPLICATION

(11) **EP 4 009 241 A1**
(43) Date of publication of application: **08.06.2022**
(21) Application number: 21199253.2
(22) Date of filing: 27.09.2021
(51) Int. Cl.: G06N 3/04, G06N 3/063, G06N 3/08

(54) **ARITHMETIC PROCESSING APPARATUS, ARITHMETIC PROCESSING METHOD, AND ARITHMETIC PROCESSING PROGRAM**

(30) Priority: 03.12.2020 JP 2020200914
(71) Applicant: FUJITSU LIMITED, Kanagawa 211-8588 (JP)
(72) Inventor: MIWA, Masahiro, Kanagawa, 211-8588 (JP)
(74) Representative: Haseltine Lake Kempner LLP

(57) **Abstract**

An arithmetic processing apparatus includes arithmetic units; and one or more processors configured to execute a training of a deep neural network by arithmetic units in parallel by allocating a plurality of processes to the arithmetic units, aggregate a plurality of variable update information that are used respectively used for updating a plurality of variables of the deep neural network and are obtained by the training by each of the plurality of processes, between the plurality of processes for each of the plurality of variables, and determine whether superior or not the training by a certain number of processes that is less than the number of processes of the plurality of processes is, based on first variable update information that is variable update information aggregated between the plurality of processes and second variable update information that is variable update information during the aggregating.

## Description

### FIELD

The embodiment discussed herein is related to an arithmetic processing apparatus, an arithmetic processing method, and an arithmetic processing program.

### BACKGROUND

In deep learning, a method is known in which a plurality of processes (calculation nodes) use different portions of training data to execute training of a deep neural network in parallel. When training of the deep neural network is executed in parallel by the plurality of processes, aggregation processing such as Allreduce is executed between backward processing and update processing, the aggregation processing aggregating variables (gradient information of weights of the neural network) between the plurality of processes.

Japanese Laid-open Patent Publication No. 2020-068016, Japanese Laid-open Patent Publication No. 2020-046713, and Japanese Laid-open Patent Publication No. 2019-109875 are disclosed as related art.

### SUMMARY

### [TECHNICAL PROBLEMS]

In the training of the deep neural network, the training is repeatedly executed until a recognition accuracy of an image or the like becomes equal to or higher than a predetermined accuracy. A training time until the recognition accuracy becomes equal to or higher than the predetermined accuracy may be shortened as the number of processes that execute the training (for example, the number of processes in parallel) is increased. However, even when the number of processes that execute the training is reduced, the recognition accuracy equivalent to that before the reduction of the number of processes may be obtained with almost no change in the training time. In a case where the same recognition accuracy may be achieved with a small number of processes, hardware resources (power) used by the processes may be reduced. Hereinafter, the fact that the same recognition accuracy is obtained with a small number of processes is referred to as superiority of the training. Whether or not the number of processes is reduced is determined by executing each aggregation processing for different number of processes that aggregate training results after the backward processing and comparing the aggregation results.

In one aspect, an object of the present disclosure is to determine superiority of training in a case where the number of processes that execute the training is reduced by one aggregation processing.

### [SOLUTION TO PROBLEM]

According to an aspect of the embodiments, an arithmetic processing apparatus includes arithmetic units; and one or more processors coupled to the arithmetic units, configured to execute a training of a deep neural network by arithmetic units in parallel by allocating a plurality of processes to the arithmetic units, aggregate a plurality of variable update information that are used respectively used for updating a plurality of variables of the deep neural network and are obtained by the training by each of the plurality of processes, between the plurality of processes for each of the plurality of variables, and determine whether superior or not the training by a certain number of processes that is less than the number of processes of the plurality of processes is, based on first variable update information that is variable update information aggregated between the plurality of processes and second variable update information that is variable update information during the aggregating.

### [ADVANTAGEOUS EFFECTS OF INVENTION]

It is possible to determine superiority of training in a case where the number of processes that execute training is reduced by one aggregation processing.

### BRIEF DESCRIPTION OF DRAWINGS

FIG. 1 is a block diagram illustrating an example of an arithmetic processing apparatus according to an embodiment;
FIG. 2 is an explanatory diagram illustrating an example of training of a DNN executed by a server in FIG. 1;
FIG. 3 is an explanatory diagram illustrating an overview of Allreduce communication that is one of inter-process communications;
FIG. 4 is an explanatory diagram illustrating an example of processing of optimizing the number of processes used for training of the DNN by the server in FIG. 1;
FIG. 5 is an explanatory diagram illustrating an example of a difference in a recognition accuracy due to a difference in the number of processes in the training of the DNN;
FIG. 6 is an explanatory diagram illustrating an example in which the server in FIG. 1 executes a Allreduce communication using Ring-Allreduce algorithm as an inter-process communication in FIG. 4;
FIG. 7 is an explanatory diagram illustrating a continuation in FIG. 6;
FIG. 8 is an explanatory diagram illustrating a continuation in FIG. 7;
FIG. 9 is an explanatory diagram illustrating a continuation in FIG. 8;
FIG. 10 is an explanatory diagram illustrating a continuation in FIG. 9;
FIG. 11 is an explanatory diagram illustrating a continuation in FIG. 10;
FIG. 12 is an explanatory diagram illustrating a continuation in FIG. 11;
FIG. 13 is an explanatory diagram illustrating a continuation in FIG. 12;
FIG. 14 is an explanatory diagram illustrating a continuation in FIG. 13;
FIG. 15 is an explanatory diagram illustrating a continuation in FIG. 14;
FIG. 16 is an explanatory diagram illustrating a continuation in FIG. 15;
FIG. 17 is an explanatory diagram illustrating a continuation in FIG. 16;
FIG. 18 is an explanatory diagram illustrating a continuation in FIG. 17; and
FIG. 19 is a flowchart illustrating an example of training by a DNN by the server in FIG. 1.

### DESCRIPTION OF EMBODIMENTS

Hereinafter, embodiments will be described with reference to the drawings.

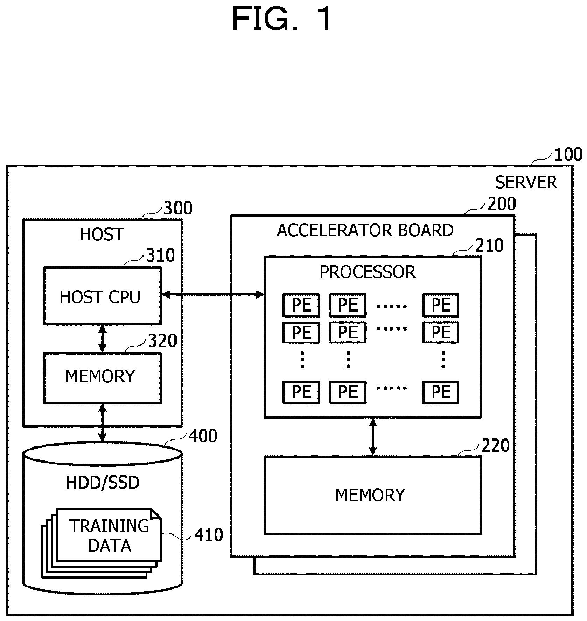

FIG. 1 illustrates an example of an arithmetic processing apparatus according to an embodiment. The arithmetic processing apparatus of this embodiment is, for example, a server 100. The server 100 includes an accelerator board 200 on which a processor 210 and a memory 220 are mounted, a host 300 on which a host central processing unit (CPU) 310 and a memory 320 are mounted, and a storage 400. The processor 210 and the host CPU 310 of the host 300 are coupled to each other via a communication bus such as a Peripheral Component Interconnect Express (PCIe) bus, for example.

In FIG. 1, the server 100 includes the 2 accelerator boards 200, and may include the 1 or 3 accelerator boards 200 or more. The accelerator board 200 may include a plurality of processors 210. In this case, the plurality of processors 210 mounted on the accelerator board 200 may have the same type or different types.

In a case where the accelerator board 200 or the processor 210 may independently execute training of a DNN, the accelerator board 200 or the processor 210 may function as the arithmetic processing apparatus of the present embodiment. In a case where the training of the DNN is executed by a cluster including a plurality of servers 100, the cluster may function as the arithmetic processing apparatus of the present embodiment.

For example, the processor 210 is a dedicated processor for a graphics processing unit (GPU), a CPU, or deep learning. The processor 210 includes a plurality of processing units (processing element) PE arranged in a matrix. For example, each processing unit PE includes an arithmetic element such as a multiply-add arithmetic element, a register, and the like. The arithmetic element mounted in each processing unit PE may be a floating-point arithmetic element or a fixed-point arithmetic element. The processor 210 is an example of an arithmetic unit capable of executing training of a neural network.

The memory 220 is, for example, a main memory such as a dynamic random-access memory (DRAM), and stores data to be used by each processing unit PE in training a deep neural network (input data of each layer of DNN, variables such as weights, output data, or the like).

The host CPU 310 controls the processor 210 to cause the processor 210 to execute training of the DNN. For example, the host CPU 310 executes an arithmetic processing program loaded in the memory 320, which is a main memory such as a DRAM, to cause the processor 210 to execute training of the DNN. The host CPU 310 is coupled to the memory 320 and the storage 400 that are hierarchically provided. For example, the storage 400 includes at least one of a hard disk drive (HDD) and a solid-state drive (SSD). In training of the DNN, the host CPU 310 causes the processor 210 to execute training by using training data 410 stored in the storage 400.

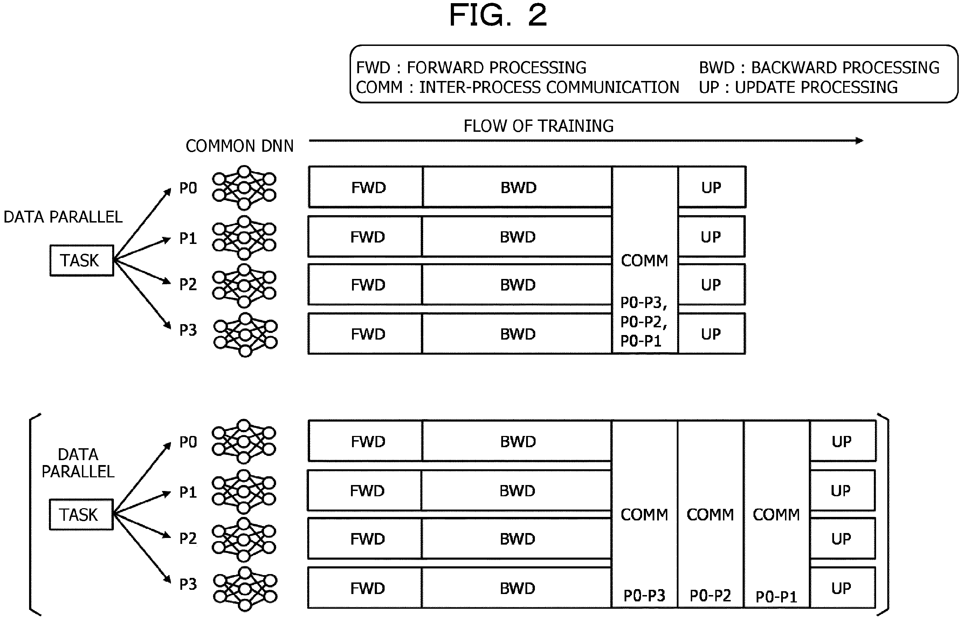

FIG. 2 illustrates an example of training of a DNN executed by the server 100 in FIG. 1. An upper side in FIG. 2 illustrates a flow of training according to the present embodiment, and a lower side in FIG. 2 illustrates a flow of training by another method (comparative example). The server 100 executes tasks of executing training of the DNN in parallel by using (n - 1) processes P (P0, P1, P2, and Pn). Each process P uses different types of data to execute training of a common DNN. In the embodiment, for the sake of clarity, the server 100 executes 4 processes P in parallel, and the number of processes P to be executed in parallel is not limited to 4. Various types of calculations used for the training of the DNN executed by the server 100 are executed by the processor 210 based on instructions from the server 100.

The server 100 executes training of the DNN by repeating forward processing FWD, backward processing BWD, an inter-process communication COMM, and update processing UP. In the forward processing FWD for each process P, the server 100 sequentially executes an arithmetic operation of data and a weight input to the DNN from a layer on the input side to obtain output data. The server 100 calculates an error (loss function) that is a difference between the output data and correct answer data for each process P.

In the backward processing BWD for each process P, the server 100 calculates weight gradient data (gradient of a loss function related to a weight parameter of the neural network) for obtaining a weight with which an error is decreased. Next, in the inter-process communication COMM, the server 100 shares the weight gradient data calculated by each process P with all the processes P, and acquires an average of the pieces of weight gradient data for all the processes P. For example, a Allreduce communication using Ring-Allreduce algorithm is used as the inter-process communication COMM. The inter-process communication COMM and the Allreduce communication using Ring-Allreduce algorithm are examples of aggregation processing of aggregating pieces of weight gradient data.

In the update processing UP for each process P, the server 100 updates the weight by using the weight gradient data averaged between the processes P. The updated weight is used in common by all the processes P in the next iteration. The server 100 repeatedly executes the next iteration (the forward processing FWD, the backward processing BWD, the inter-process communication COMM, and the update processing UP) by using the updated weight. In a case where a recognition accuracy by the DNN is improved by a predetermined accuracy or more due to a decrease in the loss function, or in a case where training is executed for a predetermined number of epochs, the server 100 terminates the training of the DNN.

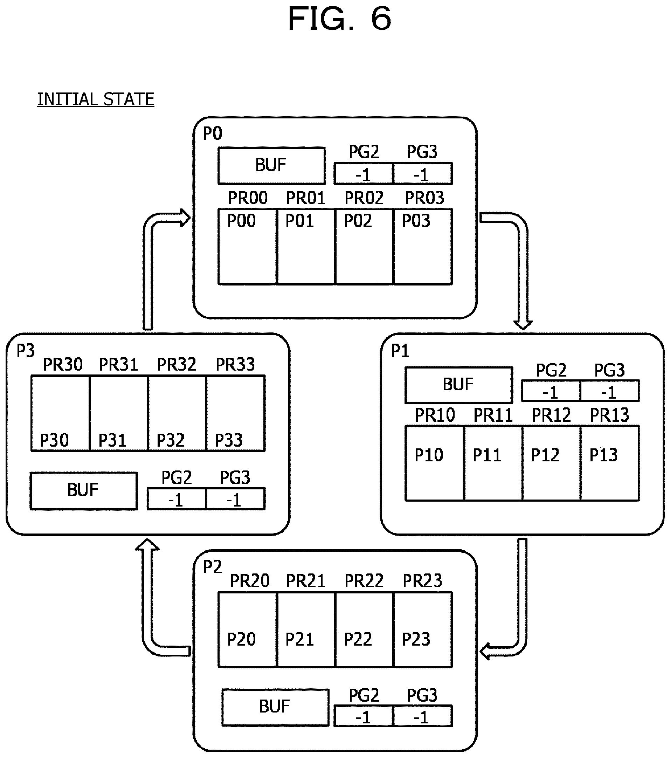

On the upper side in FIG. 2, an average of pieces of weight gradient data of 3 different number of processes (4 processes P0 to P3, 3 processes P0 to P2, and 2 processes P0 and P1) is calculated by one inter-process communication COMM. An example of calculating the average of the pieces of weight gradient data of 3 different number of processes (the 4 processes P0 to P3, the 3 processes P0 to P2, and the 2 processes P0 and P1) by the one inter-process communication COMM will be described with reference to FIGs. 6 to 14. In the comparative example on the lower side in FIG. 2, the average of the pieces of weight gradient data of 3 number of processes (the 4 processes P0 to P3, the 3 processes P0 to P2, and the 2 processes P0 and P1) are respectively calculated by the three inter-process communications COMM.

Even in a case where the training by the process P3 or the processes P2 and P3 is omitted, in a case where the server 100 determines that a recognition accuracy may be improved to be equal to or higher than a predetermined accuracy with a predetermined number of epochs, the server 100 reduces the number of processes P to continue the subsequent training. By reducing the number of processes that execute training, the number of processors 210, the number of accelerator boards 200, or the number of servers 100 to be used in the subsequent training may be reduced, and power may be reduced while reducing hardware resources.

In this embodiment, since the average of the pieces of weight gradient data of the number of a plurality of processes may be calculated by the one inter-process communication COMM, a training time may be shortened and training efficiency may be improved, as compared with the comparative example on the lower side in FIG. 2. In other words, for example, superiority of training in a case where the number of processes that execute the training is reduced may be determined by one aggregation processing.

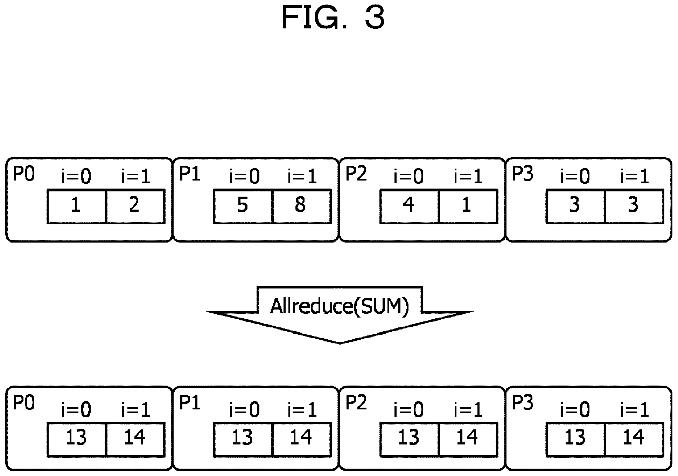

FIG. 3 illustrates an overview of Allreduce communication that is one of the inter-process communications COMM. FIG. 3 illustrates an example of Allreduce communication in which a sum of 2 elements (i = 0, 1) in an array between 4 processes P0 to P3 is calculated. In addition to SUM, other arithmetic operations such as MAX (maximum) and MIN (minimum) are also available when aggregation is performed by Allreduce communication.

In the Allreduce communication, each process P calculates a sum by adding values of respective elements i of the 4 processes P0 to P3. In the example illustrated in FIG. 3, the value of the element i = 0, 1 held by each process P becomes "13", "14" by the addition by the Allreduce communication. An average value may be calculated by dividing the value of each element i = 0, 1 by the number of processes. Hereinafter, the Allreduce communication is also simply referred to as Allreduce.

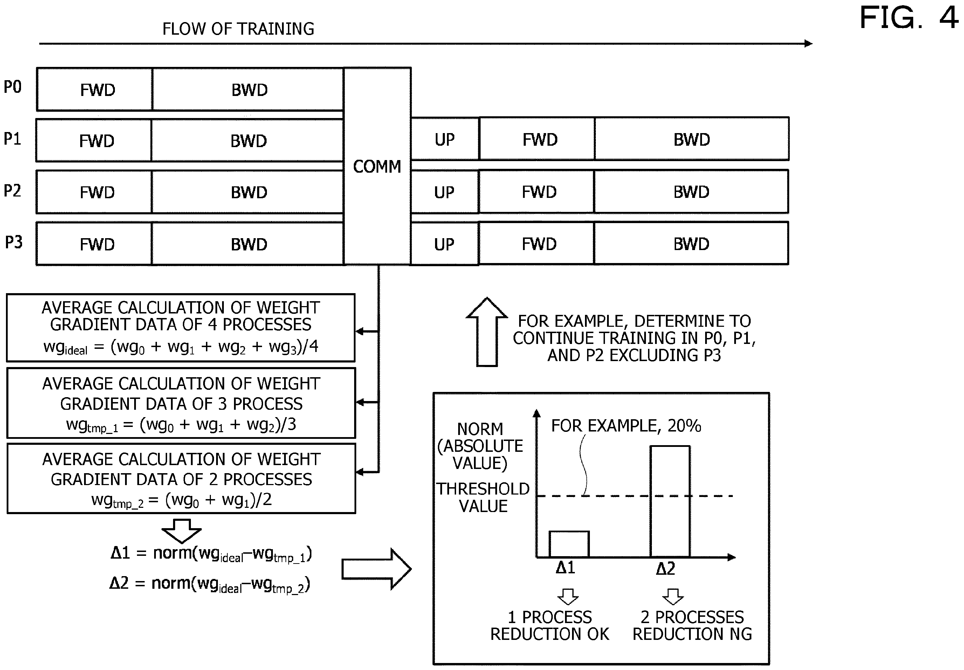

FIG. 4 is an explanatory diagram illustrating an example of processing for optimizing the number of processes used for training of a DNN by the server 100 in FIG. 1. Detailed description of processing having the same manner as the processing on the upper side in FIG. 2 is omitted. In FIG. 4, a reference numeral wg (weight gradient) indicates weight gradient data calculated in the backward processing BWD for each process P, and an end numerical value of the reference numeral wg indicates a process number for identifying the process P. The weight gradient data is an example of variable update information.

A reference numeral wg_{ideal} indicates an average of pieces of ideal weight gradient data for the 4 processes P0 to P3 for which the number of processes is not reduced (a case of using training results for all the number of processes is assumed to be ideal). A reference numeral wgₜₘₚ_₁ indicates an average of pieces of weight gradient data of the 3 processes P0, P1, and P2 for which the number of processes is reduced by 1. A reference numeral wgₜₘₚ_₂ indicates an average of pieces of weight gradient data for the 2 processes P0 and P1 for which the number of processes is reduced by 2.

The server 100 calculates a difference (norms Δ1 and Δ2 of a difference from an ideal vector) from the ideal value wg_{ideal} of weight gradient data by using each average of the three types of weight gradient data calculated by the one inter-process communication COMM. The norm Δ1 of the difference in a case where the number of processes is reduced by 1 is a norm (wg_{ideal}-wgₜₘₚ_₁). The norm Δ2 of the difference in a case where the number of processes is reduced by 2 is a norm (wg_{ideal} - wgₜₘₚ_₂).

The server 100 determines whether or not each of the norms Δ1 and Δ2 of the differences is equal to or smaller than a predetermined threshold value (for example, within 20%). In this example, the norm Δ1 of the difference is smaller than the predetermined threshold value, and the norm Δ2 of the difference is larger than the predetermined threshold value. For this reason, in the subsequent training, the server 100 determines to continue the training by using, for example, the 3 processes P0 to P2 excluding the process P3.

The server 100 calculates an update value of a weight by the update processing UP using the average wgₜₘₚ_₁ of the weight gradient data averaged by Ring-Allreduce of the processes P0 to P2, and reflects the calculated update value of the weight on each of the processes P0 to P2. Then, the server 100 continues training by using the processes P0 to P2.

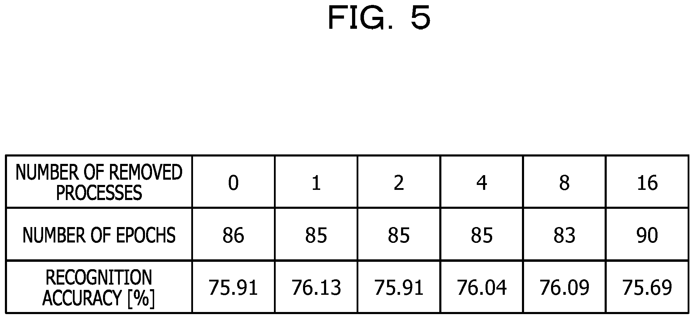

FIG. 5 illustrates an example of a difference in a recognition accuracy due to a difference in the number of processes in training of a DNN. FIG. 5 illustrates an example in which, for example, 32 processes are allocated to 32 GPUs, and training is executed by using ResNet-50, which is a type of deep neural network, and ImageNet, which is a standard dataset. The number of epochs is the number of repetitions of training, and a smaller number of epochs indicates a shorter training time.

A recognition accuracy when training is executed without removing the process is 75.91% at 86 epochs. A target recognition accuracy is equal to or more than 75.9%, for example. The training that achieves the target recognition accuracy is performed when the number of removed processes is 1, 2, 4, or 8. In a case where the 16 processes are removed, the recognition accuracy is 75.69% even when training of 90 epochs is executed. From FIG. 5, it may be understood that, by removing the 8 processes and executing training with the 24 processes, a predetermined recognition accuracy may be obtained without increasing the training time.

FIGs. 6 to 18 illustrate an example in which the server 100 in FIG. 1 executes a Allreduce communication using Ring-Allreduce algorithm as the inter-process communication COMM in FIG. 4. The server 100 determines whether or not the number of processes P0 to P3 may be reduced, based on an aggregation result obtained by the Allreduce communication using Ring-Allreduce algorithm illustrated in FIGs. 6 to 18. Hereinafter, the Allreduce communication using Ring-Allreduce algorithm is also simply referred to as Ring-Allreduce. Each step illustrated in FIGs. 6 to 18 indicates a transfer of data between processes by the Ring-Allreduce, and the total number of steps indicates a cost of the Ring-Allreduce.

In FIGs. 6 to 18, hollow arrows indicate directions in which data is transferred. In this example, as illustrated in FIG. 4, forward processing and backward processing are executed in parallel by using the 4 processes P0 to P3. The Ring-Allreduce is realized by the host CPU 310 of the server 100 executing an arithmetic processing program, but is described below as an operation of the processes P0 to P3.

For example, each of the processes P0 to P3 includes 4 regions PR (PRn0 to PRn3; and n is a process number) holding one-dimensional data (element), a buffer BUF, and flag regions PG2 and PG3. The number of regions PR provided in each of the processes P0 to P3 is not limited to 4, and is preferably an integer multiple of the number of processes in order to effectively execute the Ring-Allreduce processing.

The 4 regions PRn0 to PRn3, the buffer BUF, and the flag regions PG2 and PG3 of each of the processes P0 to P3 are allocated to, for example, the memory 220 in FIG. 1 or an internal memory in the processor 210 in FIG. 1. The buffer BUF and the flag regions PG2 and PG3 may be allocated to registers in the processor 210 in FIG. 1.

FIG. 6 illustrates an initial state before Ring-Allreduce is started after weight gradient data is calculated by the backward processing BWD. The 4 regions PR00 to PR03 of the process P0 respectively hold 4 pieces of weight gradient data P00, P01, P02, and P03 calculated by the backward processing BWD of the process P0. The 4 regions PR10 to PR13 of the process P1 respectively hold 4 pieces of weight gradient data P10, P11, P12, and P13 calculated by the backward processing BWD of the process P1.

The 4 regions PR20 to PR23 of the process P2 respectively hold 4 pieces of weight gradient data P20, P21, P22, and P23 calculated by the backward processing BWD of the process P2. The 4 regions PR30 to PR33 of the process P3 respectively hold 4 pieces of weight gradient data P30, P31, P32, and P33 calculated by the backward processing BWD of the process P3.

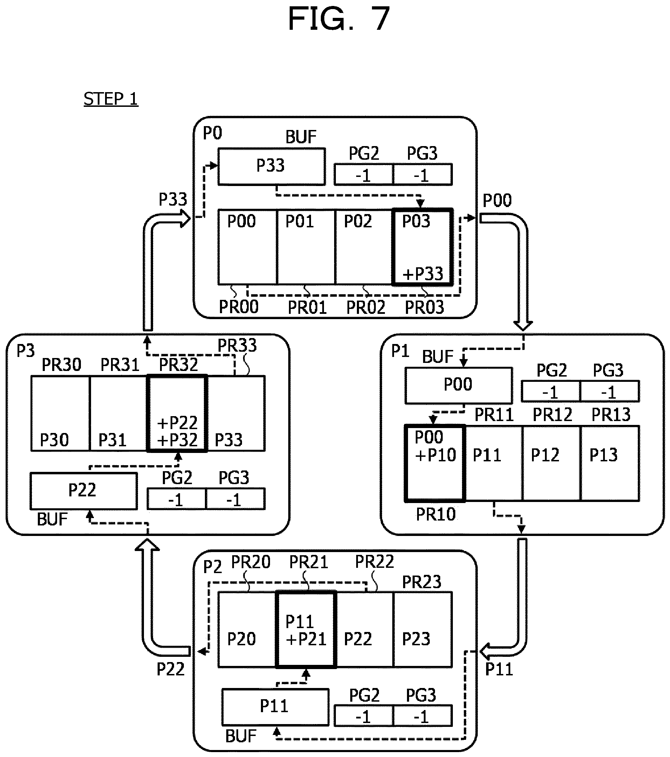

In FIGs. 7 to 14, each of the processes P0 to P3 sequentially aggregates the pieces of weight gradient data held in the 4 regions PRn0 to PRn3 by the backward processing BWD. During the aggregation of the pieces of weight gradient data, each of the processes P0 to P3 sets a determination result as to whether a norm of a difference of the weight gradient data from an ideal value when the number of processes is set to 2 or 3 is equal to or smaller than a predetermined threshold value, in the flag regions PG2 and PG3.

The flag region PG2 is set to "True" in a case where the norm of the difference between the weight gradient data and the ideal value when the number of processes is set to 2 is equal to or smaller than the threshold value, and is set to "False" in a case where the norm of the difference is larger than the threshold value. The flag region PG3 is set to "True" in a case where the norm of the difference between the weight gradient data and the ideal value when the number of processes is set to 3 is equal to or smaller than the threshold value, and is set to "False" in a case where the norm of the difference is larger than the threshold value. For example, "True" indicates a logical value 1, and "False" indicates a logical value 0. The flag regions PG2 and PG3 are set to "-1" (for example, consecutive F of a hexadecimal number) in the initial state.

In FIGs. 7 to 14, broken line arrows indicate data transfer paths, and the region PR surrounded by a bold frame indicates that weight gradient data is updated. Each process transmits data to an adjacent process in each step. The adjacent process is a process having a number obtained by adding 1 to its own process number j. At this time, in a case where the process number obtained by adding 1 to j exceeds "the number of processes - 1", the process number is set to "(j + 1)% (the number of processes - 1)" (% represents a remainder calculation). For example, P0 is transmitted to P1, P1 is transmitted to P2, P2 is transmitted to P3, and P3 is transmitted to P0. Conversely, P1 is received from P0, P2 is received from P1, P3 is received from P2, and P0 is received from P3. The processes to be the partners of transmission and reception are common to the following steps.

In FIG. 7, each of the processes P0 to P3 executes STEP 1, which is the first step of Ring-Allreduce of weight gradient data. Each process Pj (j is a process number) transmits weight gradient data held in the region PR for which an end numerical value is "j - (current step number) + 1" to the adjacent process. In STEP 1, the weight gradient data for which the end numerical value is "j - 1 + 1", for example, the weight gradient data hold in the region PR of "j" is transmitted. For example, P0 transmits data of PR00 since a value of j is 0. P1 transmits data of PR01 since the value of j is 1. P2 transmits data of PR02 since the value of j is 2. P3 transmits data of PR03 since the value of j is 3.

Each process stores the received weight gradient data in the buffer BUF. Each process adds the weight gradient data stored in the buffer to weight gradient data held in the region PR for which an end number is "j - (current step number)". In STEP 1, the number is "j - 1". In a case where "j - 1" is a negative value, a value of the number of processes is added until the value becomes a positive value. For example, since the value of "j - 1" is -1 in P0, 3 is obtained by adding 4, which is the number of processes. Therefore, P0 performs addition on the region PR03 having an end number of 3. Since the value of "j - 1" is 0, P1 performs addition on the region PR10 having the end number of 0. Since the value of "j - 1" is 1, P2 performs addition on PR21. Since the value of "j - 1" is 2, P3 performs addition on PR32.

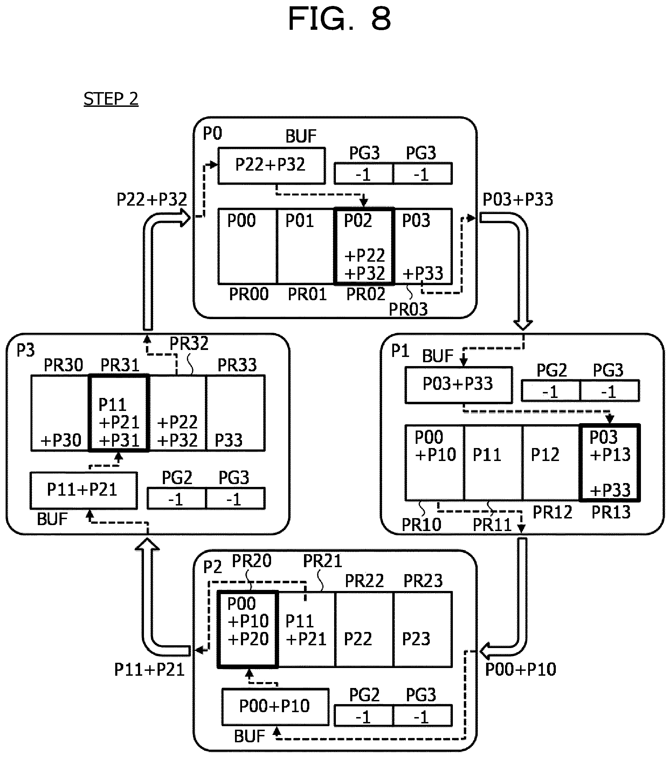

Next, in FIG. 8, each of the processes P0 to P3 executes STEP 2, which is the second transfer of the weight gradient data in the Ring-Allreduce. Each process Pj transmits weight gradient data held in the region PR for which an end numerical value is "j - (current step number) + 1" to the adjacent process. In STEP 2, the weight gradient data for which the end number is "j - 2 + 1", for example, the weight gradient data held in the region PR of "j - 1" is transmitted. In a case where "j - 1" is a negative value, a value of the number of processes is added until the value becomes a positive value. For example, since "j - 1" is -1 in P0, 3 is obtained by adding 4, which is a value of the number of processes. Therefore, data of PR03 is transmitted. P1 transmits data of PR10 since "j - 1" is 0. P2 transmits data of PR21 since "j - 1" is 1. P3 transmits data of PR32 since "j - 1" is 2.

Each process Pj stores the weight gradient data received from the adjacent process in the buffer BUF. Each process Pj adds the weight gradient data stored in the buffer BUF to weight gradient data held in the region PR for which an end number is "j - (step number)". In STEP 2, the number is "j - 2". In a case where "j - 2" is a negative value, a value of the number of processes is added until the value becomes a positive value. For example, since "j - 2" is -2 in P0, 2 is obtained by adding 4, which is a value of the number of processes. Therefore, addition is performed on PR02. Since "j - 2" is -1 in P1, 3 is obtained by adding 4, which is a value of the number of processes. Therefore, addition is performed on PR13. Since "j - 2" is 0, P2 performs addition on PR20. Since "j - 2" is 1, P3 performs addition on PR31.

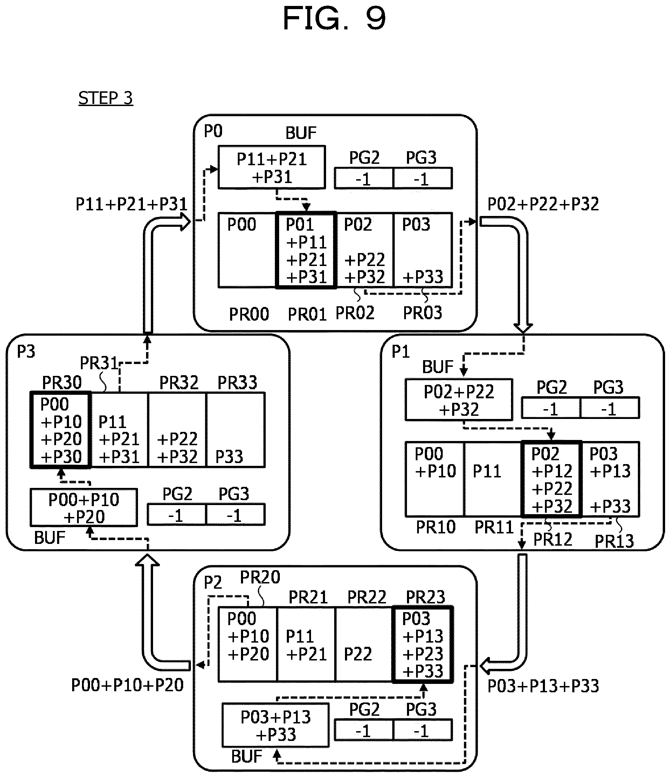

Next, in FIG. 9, each of the processes P0 to P3 executes STEP 3, which is the third transfer of the weight gradient data in the Ring-Allreduce. Each process Pj transmits weight gradient data held in the region PR for which an end numerical value is "j - (current step number) + 1" to the adjacent process. In STEP 3, the weight gradient data for which the end number is "j - 3 + 1", for example, the weight gradient data of "j - 2" is transmitted. In a case where "j - 2" is a negative value, a value of the number of processes is added until the value becomes a positive value. For example, since "j - 2" is -2 in P0, 2 is obtained by adding 4, which is a value of the number of processes. Therefore, P0 transmits data of PR02. Since "j - 2" is -1 in P1, 3 is obtained by adding 4, which is a value of the number of processes. Therefore, data of PR13 is transmitted. P2 transmits data of PR20 since "j - 2" is 0. P3 transmits data of PR31 since "j - 2" is 1.

Each process Pj stores the weight gradient data received from the adjacent process in the buffer BUF. Each process Pj adds the weight gradient data stored in the buffer BUF to weight gradient data held in the region PR for which an end number is "j - (step number)". In STEP 3, the number is "j - 3". In a case where "j - 3" is a negative value, a value of the number of processes is added until the value becomes a positive value. For example, since "j - 3" is -3 in P0, 1 is obtained by adding 4, which is a value of the number of processes. Therefore, addition is performed on PR01. Since "j - 3" is -2 in P1, 2 is obtained by adding 4, which is a value of the number of processes. Therefore, addition is performed on PR12. Since "j - 3" is -1 in P2, 3 is obtained by adding 4, which is a value of the number of processes. Therefore, addition is performed on PR23. Since "j - 3" is 0, P3 performs addition on PR30.

When STEP 3 is completed, the aggregation of the pieces of weight gradient data of the processes P0 to P3 is completed for the region PR added by each process Pj in STEP 3, among the 4 regions PR of the respective processes Pj. The P00 + P10 + P20 + P30, P01 + P11 + P21 + P31, P02 + P12 + P22 + P32, and P03 + P13 + P23 + P33 added by the aggregation are examples of first variable update information aggregated between the processes P0 to P3.

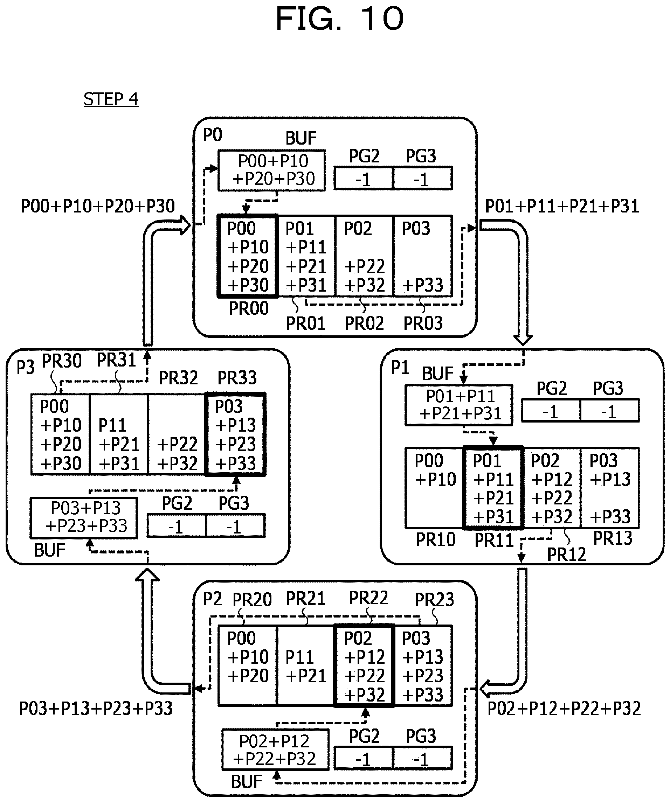

Next, in FIG. 10, each of the processes P0 to P3 executes STEP 4, which is the fourth transfer of the weight gradient data in the Ring-Allreduce. In STEP 4, STEP 5, and STEP 6, a transfer of the weight gradient data for which aggregation is completed in STEP 3 is executed.

Each process Pj transmits weight gradient data held in the region PR for which an end numerical value is "j - (current step number) + 1" to the adjacent process. In STEP 4, the weight gradient data for which the end number is "j - 4 + 1", for example, the weight gradient data of "j - 3" is transmitted. In a case where "j - 3" is a negative value, a value of the number of processes is added until the value becomes a positive value. For example, since "j - 3" is -3 in P0, 1 is obtained by adding 4, which is a value of the number of processes. Therefore, data of PR01 is transmitted. Since "j - 3" is -2 in P1, 2 is obtained by adding 4, which is a value of the number of processes. Therefore, data of PR12 is transmitted. Since "j - 3" is -1 in P2, 3 is obtained by adding 4, which is a value of the number of processes. Therefore, PR23 is transmitted. P3 transmits PR30 since "j - 3" is 0.

Each process Pj stores the weight gradient data received from the adjacent process in the buffer BUF. Each process Pj overwrites the weight gradient data stored in the buffer BUF to weight gradient data held in the region PR for which an end number is "j - (step number)". In STEP 4, the number is "j - 4". In a case where "j - 4" is a negative value, a value of the number of processes is added until the value becomes a positive value. For example, since "j - 4" is -4 in P0, 0 is obtained by adding 4, which is a value of the number of processes. Therefore, overwriting is performed on PR00. Since "j - 4" is -3 in P1, 1 is obtained by adding 4, which is a value of the number of processes. Therefore, overwriting is performed on PR11. Since "j - 4" is -2 in P2, 2 is obtained by adding 4, which is a value of the number of processes. Therefore, overwriting is performed on PR22. Since "j - 4" is -1 in P3, 3 is obtained by adding 4, which is a value of the number of processes. Therefore, overwriting is performed on PR33.

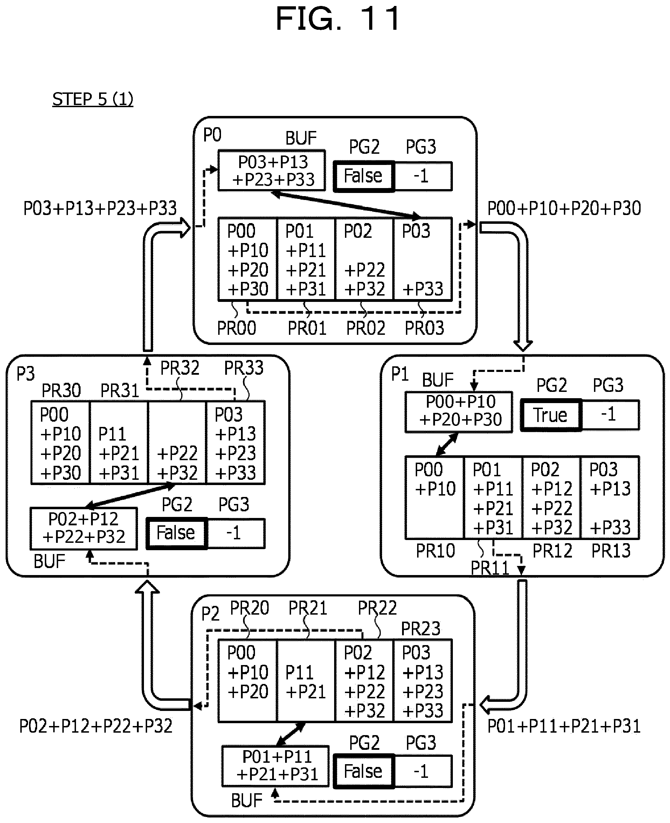

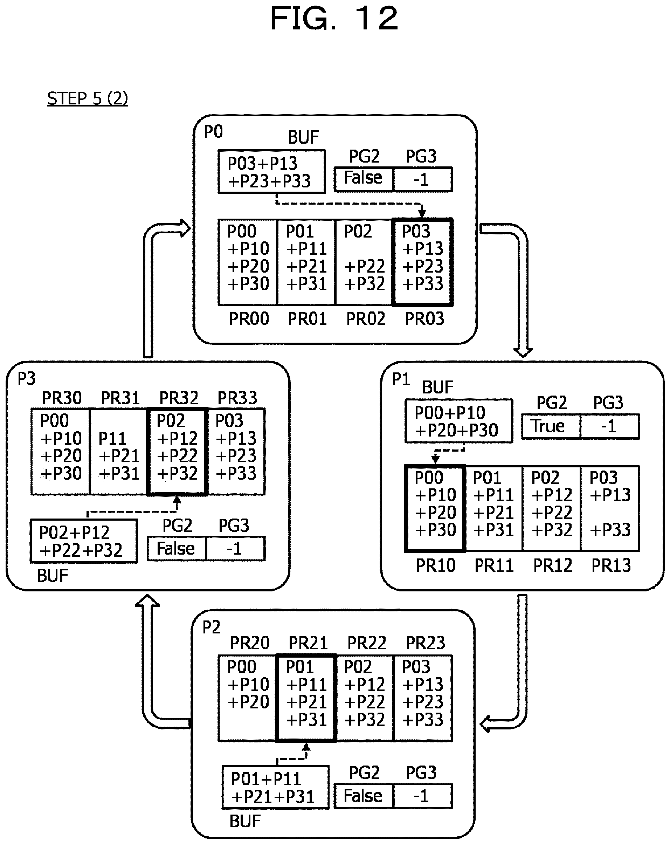

Next, in FIG. 11 and FIG. 12, each of the processes P0 to P3 executes STEP 5, which is the fifth transfer of the weight gradient data in the Ring-Allreduce. In STEP 5 (1) illustrated in FIG. 11, each process Pj transmits weight gradient data held in the region PR for which an end numerical value is "j - (current step number) + 1" to the adjacent process. In STEP 5, the weight gradient data for which the end number is "j - 5 + 1", for example, the weight gradient data of "j - 4" is transmitted. In a case where "j - 4" is a negative value, a value of the number of processes is added until the value becomes a positive value. For example, since "j - 4" is -4 in P0, 0 is obtained by adding 4, which is a value of the number of processes. Therefore, data of PR00 is transmitted. Since "j - 4" is -3 in P1, 1 is obtained by adding 4, which is a value of the number of processes. Therefore, data of PR11 is transmitted. Since "j - 4" is -2 in P2, 2 is obtained by adding 4, which is a value of the number of processes. Therefore, PR22 is transmitted. Since "j - 4" is -1 in P3, 3 is obtained by adding 4, which is a value of the number of processes. Therefore, PR33 is transmitted.

Each process Pj stores the weight gradient data received from the adjacent process and aggregated, in the buffer BUF. Each process Pj compares an average of the pieces of weight gradient data of the 4 processes P held in the buffer BUF with an average of the pieces of weight gradient data of the 2 processes P held in the region PR for which the end numerical value is "j - (step number)". In STEP 5, the region PR of "j - 5" is targeted. In a case where "j - 5" is a negative value, a value of the number of processes is added until the value becomes a positive value. For example, since "j - 5" is -5 in P0, 3 is obtained by repeatedly adding 4, which is a value of the number of processes, until the value becomes a positive value. Therefore, PR03 is a region to be compared with BUF. Since "j - 5" is -4 in P1, 0 is obtained by adding 4, which is a value of the number of processes. Therefore, PR10 is a region to be compared with BUF. Since "j - 5" is -3 in P2, 1 is obtained by adding 4, which is a value of the number of processes. Therefore, PR21 is a region to be compared with BUF. Since "j - 5" is -2 in P3, 2 is obtained by adding 4, which is a value of the number of processes. Therefore, PR32 is a region to be compared with BUF. The pieces of weight gradient data (P00 + P10, P11 + P21, P22 + P32, and P03 + P33) of the 2 processes P held in the regions PR for which the end numeral value in each process is "j - 5" are examples of second variable update information during the aggregation.

For example, each process Pj calculates the norm Δ2 of a difference illustrated in FIG. 4 by using the average of the pieces of weight gradient data of the 4 processes P and the average of the pieces of weight gradient data of the 2 processes P. In a case where the norm Δ2 of the difference is equal to or smaller than a threshold value, each process Pj sets a flag "True" (logical value 1) in the flag region PG2. In a case where the norm Δ2 of the difference exceeds the threshold value, each process Pj sets a flag "False" (logical value 0) in the flag region PG2.

In the example illustrated in FIG. 11, only the flag region PG2 of the process P1 is set to "True". In FIG. 11, the flag region PG2 surrounded by a bold frame indicates that either the flag "True" or the flag "False" is set. The flag "True" in the flag region PG2 indicates that a recognition accuracy of the 2 processes P is determined to be approximately equal to a recognition accuracy of the 4 processes P. The flag "False" in the flag region PG2 indicates that the recognition accuracy of the 2 processes P is determined to be lower than the recognition accuracy of the 4 processes P.

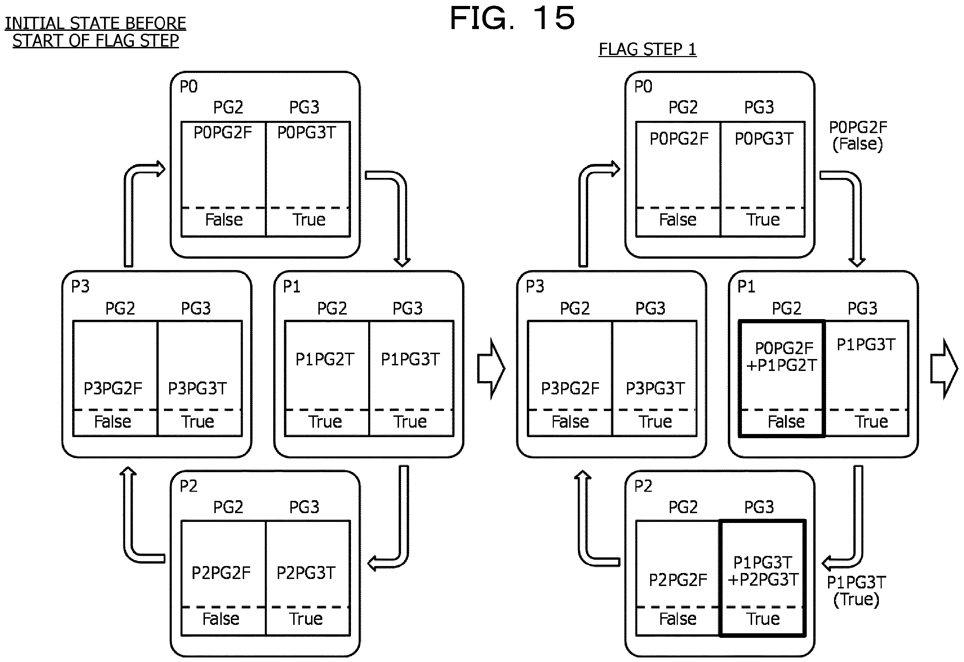

As illustrated in FIG. 11, in this embodiment, during the Ring-Allreduce of the weight gradient data, by comparing the weight gradient data for which aggregation is completed with the weight gradient data during the aggregation, it is possible to determine superiority of training for each process P. By holding information indicating the determined superiority of training in the flag region PG2 as a flag, it is possible to execute the Ring-Allreduce in which the determination results illustrated in FIGs. 15 to 18 are aggregated.

Next, in STEP 5 (2) in FIG. 12, each process Pj overwrites the weight gradient data stored in the buffer BUF to weight gradient data held in the region PR for which an end number is "j - (step number)". In STEP 5, the number is "j - 5". In a case where "j - 5" is a negative value, a value of the number of processes is added until the value becomes a positive value. For example, since "j - 5" is -5 in P0, 3 is obtained by repeatedly adding 4, which is a value of the number of processes, until the value becomes a positive value. Therefore, overwriting is performed on PR03. Since "j - 5" is -4 in P1, 0 is obtained by adding 4, which is a value of the number of processes. Therefore, overwriting is performed on PR10. Since "j - 5" is -3 in P2, 1 is obtained by adding 4, which is a value of the number of processes. Therefore, overwriting is performed on PR21. Since "j - 5" is -2 in P3, 2 is obtained by adding 4, which is a value of the number of processes. Therefore, overwriting is performed on PR32.

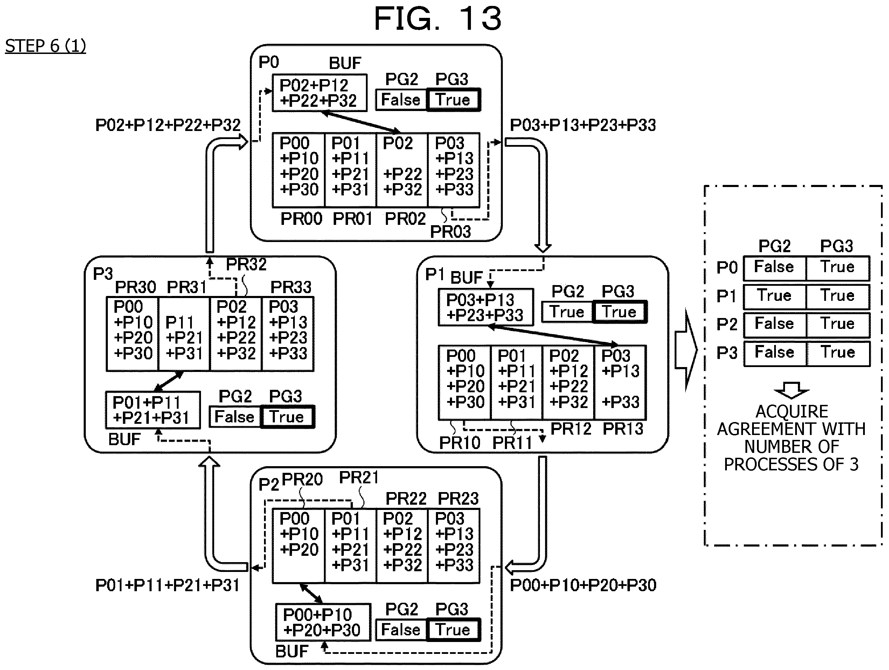

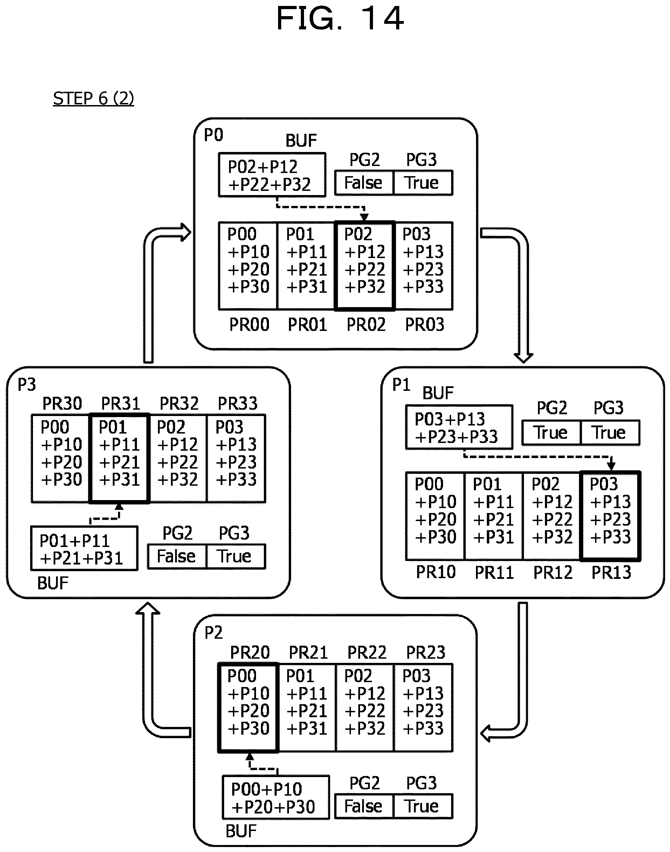

Next, in FIGs. 13 and 14, each of the processes P0 to P3 executes STEP 6, which is the sixth transfer of the weight gradient data in the Ring-Allreduce. In STEP 6 (1) illustrated in FIG. 13, each process Pj transmits weight gradient data held in the region PR for which an end numerical value is "j - (current step number) + 1" to the adjacent process. In STEP 6, the weight gradient data for which the end number is "j - 6 + 1", for example, the weight gradient data of "j - 5" is transmitted. In a case where "j - 5" is a negative value, a value of the number of processes is added until the value becomes a positive value. For example, since "j - 5" is -5 in P0, 3 is obtained by repeatedly adding 4, which is a value of the number of processes, until the value becomes a positive value. Therefore, data of PR03 is transmitted. Since "j - 5" is -4 in P1, 0 is obtained by adding 4, which is a value of the number of processes. Therefore, data of PR10 is transmitted. Since "j - 5" is -3 in P2, 1 is obtained by adding 4, which is a value of the number of processes. Therefore, PR21 is transmitted. Since "j - 5" is -2 in P3, 2 is obtained by adding 4, which is a value of the number of processes. Therefore, PR32 is transmitted.

Each process Pj stores the weight gradient data received from the adjacent process and aggregated, in the buffer BUF. Each process Pj compares an average of the pieces of weight gradient data of the 4 processes P held in the buffer BUF with an average of the pieces of weight gradient data of the 3 processes P held in the region PR for which the end numerical value is "j - (step number)". For example, since "j - 6" is -6 in P0, 2 is obtained by repeatedly adding 4, which is a value of the number of processes, until the value becomes a positive value. Therefore, PR02 is a region to be compared with BUF. Since "j - 6" is -5 in P1, 3 is obtained by adding 4, which is a value of the number of processes. Therefore, PR13 is a region to be compared with BUF. Since "j - 6" is -4 in P2, 0 is obtained by adding 4, which is a value of the number of processes. Therefore, PR20 is a region to be compared with BUF. Since "j - 6" is -3 in P3, 1 is obtained by adding 4, which is a value of the number of processes. Therefore, PR31 is a region to be compared with BUF. The pieces of weight gradient data "P00 + P10 + P20, P11 + P21 + P31, P02 + P22 + P32, and P03 + P13 + P33" of the 3 processes P held in the region PR for which the end numeral value in each process is "j - 6" are examples of second variable update information during the aggregation.

For example, each process Pj calculates the norm Δ1 of a difference illustrated in FIG. 4 by using the average of the pieces of weight gradient data of the 4 processes P and the average of the pieces of weight gradient data of the 3 processes P. In a case where the norm Δ1 of the difference is equal to or smaller than a threshold value, each process Pj sets a flag "True" (logical value 1) in the flag region PG3. In a case where the norm Δ1 of the difference exceeds the threshold value, each process Pj sets a flag "False" (logical value 0) in the flag region PG3.

In the example illustrated in FIG. 13, the flag regions PG3 of all the processes P0 to P3 are set to "True". In FIG. 13, the flag region PG3 surrounded by a bold frame indicates that either the flag "True" or the flag "False" is set. The flag "True" in the flag region PG3 indicates that a recognition accuracy of the 3 processes P is determined to be approximately equal to a recognition accuracy of the 4 processes P. The flag "False" in the flag region PG3 indicates that the recognition accuracy of the 3 processes P is determined to be lower than the recognition accuracy of the 4 processes P.

Also in FIG. 13, during the Ring-Allreduce of the weight gradient data, by comparing the weight gradient data for which aggregation is completed with the weight gradient data during the aggregation, it is possible to determine superiority of training for each process P. By holding information indicating the determined superiority of training in the flag region PG3 as a flag, it is possible to execute the Ring-Allreduce in which the determination results of the superiority illustrated in FIGs. 15 to 18 are aggregated.

Next, in STEP 6 (2) in FIG. 14, each process Pj overwrites the weight gradient data stored in the buffer BUF to weight gradient data held in the region PR for which an end number is "j - (step number)". In STEP 6, the number is "j - 6". In a case where "j - 6" is a negative value, a value of the number of processes is added until the value becomes a positive value. For example, since "j - 6" is -6 in P0, 2 is obtained by repeatedly adding 4, which is a value of the number of processes, until the value becomes a positive value. Therefore, overwriting is performed on PR02. Since "j - 6" is -5 in P1, 3 is obtained by repeatedly adding 4, which is a value of the number of processes, until the value becomes a positive value. Therefore, overwriting is performed on PR13. Since "j - 6" is -4 in P2, 0 is obtained by adding 4, which is a value of the number of processes. Therefore, overwriting is performed on PR20. Since "j - 6" is -3 in P3, 1 is obtained by adding 4, which is a value of the number of processes. Therefore, overwriting is performed on PR31.

As described above, in each of the processes P0 to P3, the average of the aggregated pieces of weight gradient data is held in all the regions PR, and one of the flag "True" and the flag "False" is set in the flag regions PG2 and PG3. The flag "True" or the flag "False" set in the flag regions PG2 and PG3 is a value calculated by each of the processes P0 to P3. For this reason, as illustrated in FIGs. 15 to 18, the Ring-Allreduce processing that aggregates the flags between the processes P0 to P3 is executed.

In a case where "True" is set in the flag regions PG2 of all the processes P0 to P3, an agreement on "True" is acquired between the processes P0 to P3. The acquisition of the agreement indicates that it is determined that it is possible to obtain a recognition accuracy equal to or higher than a predetermined accuracy with a predetermined number of epochs even in a case where subsequent training is executed using the 2 processes P. On the other hand, in a case where "False" is set in at least one of the flag regions PG2 of the processes P0 to P3, this indicates that it is determined that the agreement on "True" is not acquired between the processes P0 to P3 and that it is not possible to obtain the recognition accuracy equal to or higher than the predetermined accuracy in the subsequent training using the 2 processes P.

In the same manner, in a case where "True" is set in the flag regions PG3 of all the processes P0 to P3, the agreement on "True" is acquired between the processes P0 to P3. The acquisition of the agreement indicates that it is determined that it is possible to obtain a recognition accuracy equal to or higher than a predetermined accuracy with a predetermined number of epochs even in a case where subsequent training is executed using the 3 processes P.

In order to determine whether or not the respective flag regions PG2 and PG3 of the processes P0 to P3 are all "True", MIN (minimum) is determined in the Ring-Allreduce for the flag regions PG2 and PG3. Thus, for example, only in a case where all the flag regions PG2 are "True" (logical value 1), it is possible to set the minimum value which is a result of the Ring-Allreduce to "1", and it is possible to acquire the agreement on "True" based on the minimum value. In other words, for example, it is understood that the result of being "True" in all of the processes P0 to P3 is PG3 by executing a logical operation for obtaining the minimum value by the Ring-Allreduce of the flags.

FIGs. 15 to 18 illustrate state transitions of only the flag regions PG2 and PG3. In FIGs. 15 to 18, regions above broken lines in the respective flag regions PG2 and PG3 are regions for explanation, and do not indicate information stored in the flag regions PG2 and PG3. Regions below the broken lines of the respective flag regions PG2 and PG3 indicate a determination result of MIN (minimum) by the Ring-Allreduce of flags, and are information stored in the flag regions PG2 and PG3 in the same manner as in FIGs. 11 to 14.

The region above the broken line in each of the flag regions PG2 and PG3 indicates a state of the flags acquired in FIGs. 11 and 13, "F" at an end indicates "False", and "T" at the end indicates "True". "Px" at a head (x indicates any of 0 to 3) indicates a process that generates a flag. "PG2" or "PG3" after "Px" indicates a flag region.

The left side in FIG. 15 illustrates an initial state before a start of a flag step in which Ring-Allreduce of the flag is executed, and illustrates a state of the flag regions PG2 and PG3 when STEP 6 in FIG. 14 is completed. In FLAG STEP 1 on the right side in FIG. 15, the process P0 transfers a flag "P0PG2F" (False) in the flag region PG2 to the process P1. The process P1 executes a MIN determination on a flag "P1PG2T" held in the flag region PG2 and the received flag "P0PG2F", and changes the flag from "True" to "False".

The process P1 transfers a flag "P1PG3T" (True) in the flag region PG3 to the process P2. The process P2 executes the MIN determination on a flag "P2PG3T" held in the flag region PG3 and the received flag "P1PG3T", and maintains "True" of the flag. In FIGs. 15 to 18, the flag regions PG2 and PG3 surrounded by bold frames indicate that the MIN determination of the flag is executed.

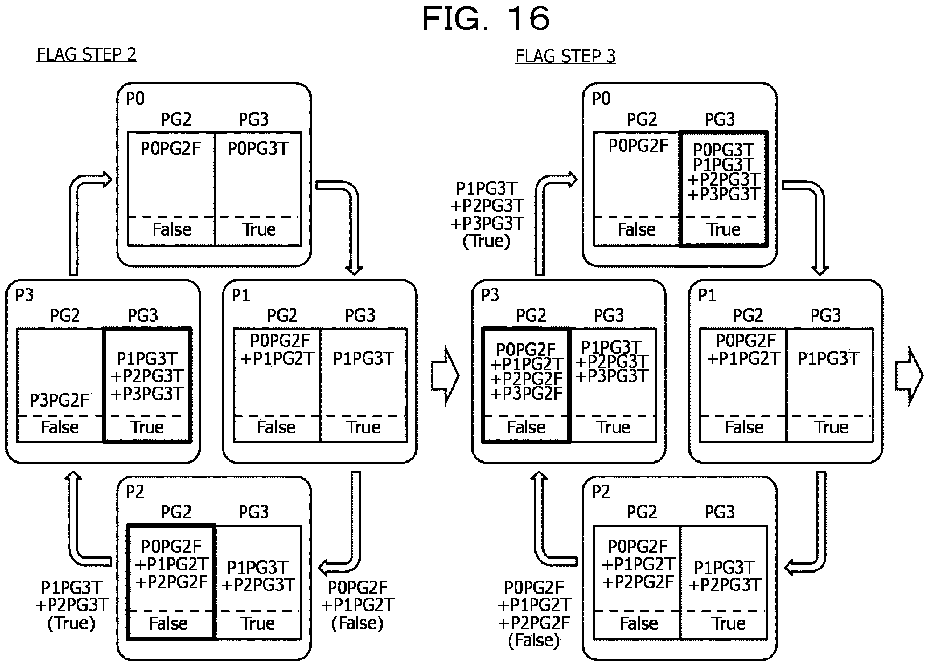

Next, in FLAG STEP 2 on the left side in FIG. 16, the process P1 transfers a flag "P0PG2F + P1PG2T" (False) of the flag region PG2 to the process P2. The process P2 executes the MIN determination on a flag "P2PG2F" held in the flag region PG2 and the received flag "P0PG2F + P1PG2T", and maintains "False" of the flag.

The process P2 transfers a flag "P1PG3T + P2PG3T" (True) in the flag region PG3 to the process P3. The process P3 executes the MIN determination on a flag "P3PG3T" held in the flag region PG3 and the received flag "P1PG3T + P2PG3T", and maintains "True" of the flag.

Next, in FLAG STEP 3 on the right side in FIG. 16, the process P2 transfers a flag "P0PG2F + P1PG2T + P2PG2F" (False) in the flag region PG2 to the process P3. The process P3 executes the MIN determination on a flag "P3PG2F" held in the flag region PG2 and the received flag "P0PG2F + P1PG2T + P2PG2F", and maintains "False" of the flag.

The process P3 transfers a flag "P1PG3T + P2PG3T + P3PG3T" = "True" in the flag region PG3 to the process P0. The process P0 executes the MIN determination on a flag "P0PG3T" held in the flag region PG3 and the received flag "P1PG3T + P2PG3T + P3PG3T", and maintains "True" of the flag.

With FLAG STEP 3, the aggregation of the flags ("True" or "False") in the flag region PG2 of the process P3 and the flag region PG3 of the process P0 is completed. Then, in FLAG STEP 4 and subsequent steps, the transfer of the flags for which the aggregation is completed is executed.

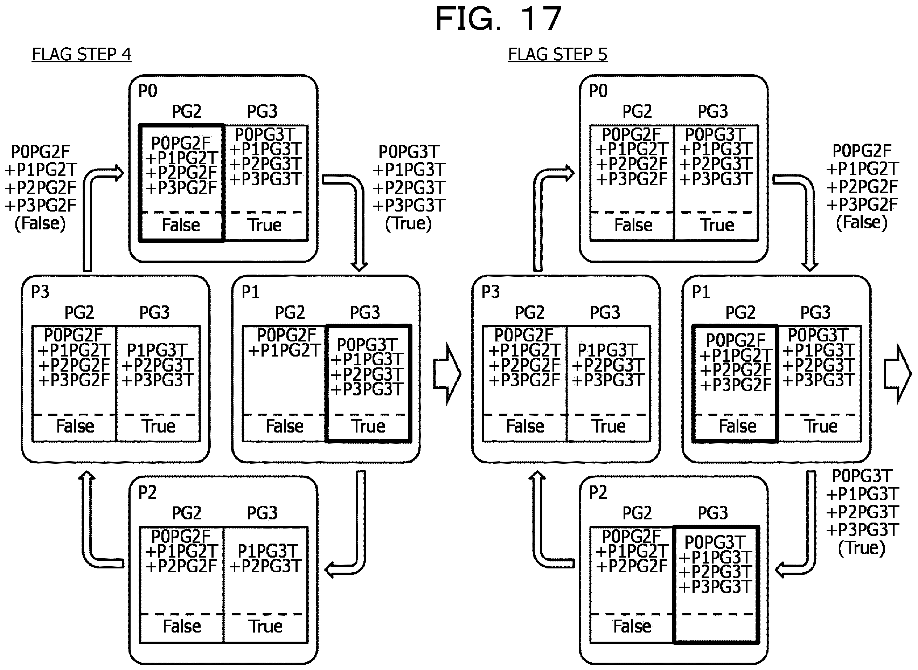

In FLAG STEP 4 on the left side in FIG. 17, the process P3 transfers a flag "P0PG2F + P1PG2T + P2PG2F + P3PG2F" (False) in the flag region PG2 to the process P0. The process P0 overwrites the received flag "P0PG2F + P1PG2T + P2PG2F + P3PG2F" in the flag region PG2, and maintains "False" of the flag.

The process P0 transfers a flag "P0PG3T + P1PG3T + P2PG3T + P3PG3T" (True) in the flag region PG3 to the process P1. The process P1 overwrites the received flag "P0PG3T + P1PG3T + P2PG3T + P3PG3T" in the flag region PG3, and maintains "True" of the flag.

Next, in FLAG STEP 5 on the right side in FIG. 17, the process P0 transfers the flag "P0PG2F + P1PG2T + P2PG2F + P3PG2F" (False) of the flag region PG2 to the process P1. The process P1 overwrites the received flag "P0PG2F + P1PG2T + P2PG2F" in the flag region PG2, and maintains "False" of the flag.

The process P1 transfers the flag "P0PG3T + P1PG3T + P2PG3T + P3PG3T" (True) in the flag region PG3 to the process P2. The process P2 overwrites the received flag "P0PG3T + P1PG3T + P2PG3T + P3PG3T" in the flag region PG2, and maintains "True" of the flag.

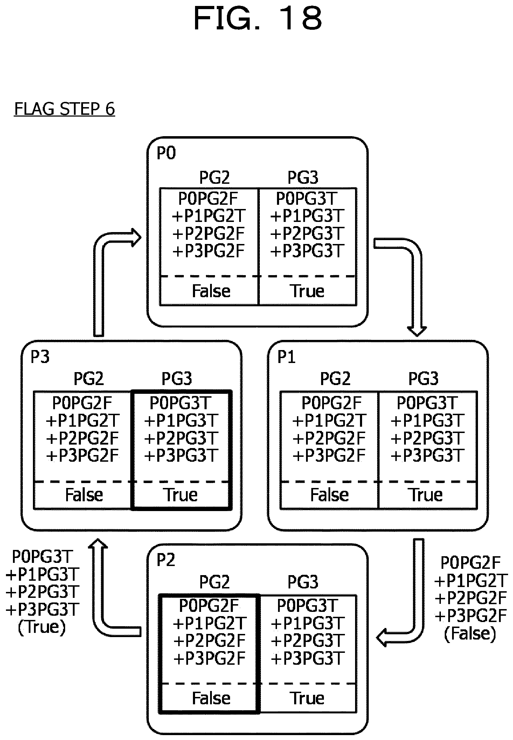

Next, in FLAG STEP 6 in FIG. 18, the process P1 transfers the flag "P0PG2F + P1PG2T + P2PG2F + P3PG2F" (False) in the flag region PG2 to the process P2. The process P2 overwrites the received flag "P0PG2F + P1PG2T + P2PG2F + P3PG2F" in the flag region PG2, and maintains "False" of the flag.

The process P2 transfers the flag "P0PG3T + P1PG3T + P2PG3T + P3PG3T" (True) in the flag region PG3 to the process P3. The process P3 overwrites the received flag "P0PG3T + P1PG3T + P2PG3T + P3PG3T" in the flag region PG3, and maintains "True" of the flag. As described above, the aggregation of the flags by the Ring-Allreduce is completed, and a common flag is held in the flag regions PG2 and PG3 of each of the processes P0 to P3.

Then, the server 100 determines whether or not the number of the processes P0 to P3 may be reduced, based on the aggregation result of the flags held in the flag regions PG2 and PG3. In the example illustrated in FIG. 18, since the flag region PG2 of each of the processes P0 to P3 has "False" (= logical value 0), the server 100 determines that, in a case where the number of processes is reduced by 2 and training is executed with training results of only 2 processes P, a recognition accuracy equal to or higher than a predetermined accuracy may not be obtained, for example, the training does not have superiority.

Since the flag region PG3 of each of the processes P0 to P3 indicates "True" (= logical value 1), the server 100 determines that the recognition accuracy equal to or higher than the predetermined accuracy may be obtained, for example, the training has superiority, even in a case where the number of processes is reduced by 1 and the training is executed by the 3 processes P. Thus, the server 100 may reduce the number of processes by 1, and execute subsequent training by using the 3 processes P. By reducing the number of processes that execute training, the number of processors 210, the number of accelerator boards 200, or the number of processing units PE to be used in the subsequent training may be reduced, and power may be reduced while reducing hardware resources.

Although FIGs. 6 to 18 illustrate the example in which a logical value of "False" is 0 and a logical value of "True" is 1, the logical value of "False" may be 1 and the logical value of "True" may be 0. In this case, in FIGs. 15 to 18, MAX (maximum) is aggregated by the Ring-Allreduce, and the maximum value is obtained. Since the flag region PG3 of each of the processes P0 to P3 indicates "True" (= logical value 0), the server 100 determines that the recognition accuracy equal to or higher than the predetermined accuracy may be obtained, for example, the training has superiority, even in a case where the number of processes is reduced by 1 and the training is executed by the 3 processes P. In this manner, an agreement on "True" may be acquired between the processes P0 to P3 by executing a logical operation for obtaining the maximum value by the Ring-Allreduce of the flag.

In FIGs. 6 to 14 described above, the Allreduce of the weight gradient data is completed in 6 steps. In FIGs. 15 to 18 described above, the Allreduce communication of the flags in the flag regions PG2 and PG3 is completed in 6 steps. For example, when the number of processes is N, each of the Allreduce communications of the weight gradient data and the flags is completed in 2 (N - 1) steps. Therefore, the Allreduce illustrated in FIGs. 15 to 18 may be completed in 2 ^{∗} 2 (N - 1) steps (12 steps in this example).

In contrast, as illustrated on the lower side in FIG. 2, in a case where the Allreduce of the 2 processes and the Allreduce communication of the 3 processes are executed separately from the Allreduce of the 4 processes, n_pg ^{∗} 2 (N - 1) steps are desirable (18 steps in this example). n_pg indicates the number of process groups of the weight gradient data, which is "3" in FIG. 2.

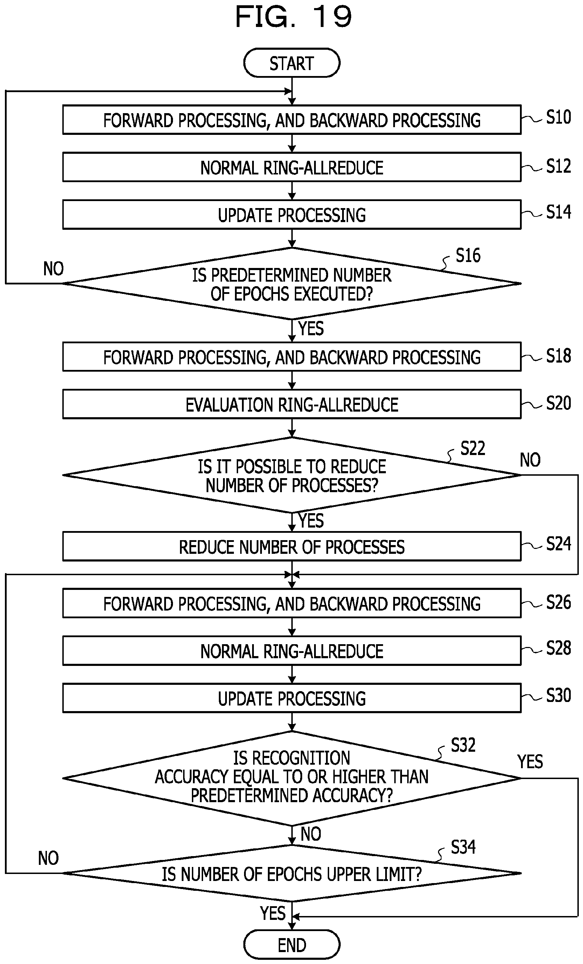

FIG. 19 illustrates an example of training of a DNN by the server 100 in FIG. 1. For example, a processing flow illustrated in FIG. 19 is implemented by the host CPU 310 of the server 100 executing an arithmetic processing program. For example, FIG. 19 illustrates an example of an arithmetic processing method and an example of the arithmetic processing program executed by the server 100. The processing flow illustrated in FIG. 19 may be implemented by hardware such as a field-programmable gate array (FPGA) mounted in the server 100, or may be implemented by cooperation of hardware and software.

First, in step S10, as illustrated in FIG. 4, the host CPU 310 executes the forward processing FWD and the backward processing BWD by using a plurality of processes P. Next, in step S12, the host CPU 310 executes normal Ring-Allreduce in which pieces of weight gradient data are aggregated between all the processes P.

The normal Ring-Allreduce corresponds to the processing in FIGs. 6 to 14. However, since the flag regions PG2 and PG3 are not used, Ring-Allreduce, in which flags are aggregated between the processes P, illustrated in FIGs. 15 to 18 is not executed. For this reason, the number of steps of the normal Ring-Allreduce is 2 (N - 1). Therefore, it is possible to shorten a time desirable for the Ring-Allreduce, as compared with the Ring-Allreduce for evaluation that is executed in step S20 which will be described below.

Next, in step S14, the host CPU 310 executes the update processing UP to update the weight using the weight gradient data averaged between the processes P in step S12. The training from step S10 to step S14 is an example of training that does not include a superiority determination that is executed by using the training results of all of the plurality of processes P0 to P3. Next, in step S16, the host CPU 310 determines, for example, whether or not a predetermined number of epochs are executed. For example, the host CPU 310 determines whether or not the training to be executed by using the training results of all of the plurality of processes P0 to P3 including no superiority determination is executed a predetermined number of times.

In a case of being executed the predetermined number of epochs, the host CPU 310 executes step S18, and in a case of not being executed the predetermined number of epochs, the host CPU 310 returns to step S10. In a case of returning to step S10, the weight updated in step S14 is used to execute the forward processing FWD and the backward processing BWD for the next iteration. The number of epochs determined in step S16 may be reduced in accordance with the degree of improvement of a recognition accuracy during the loop from step S10 to step S16.

The predetermined number of epochs is the number of epochs with which it is possible to determine whether or not it is possible to reduce the number of processes, based on the flag ("True" or "False") aggregated in step S20. Therefore, in a case where it is possible to determine whether or not it is possible to reduce the number of processes by training the number of epochs of 1, step S18 may be executed after step S14 without executing the determination in step S16. Step S10 to step S16 may be omitted, and training may be started from step S18.

In step S18, the host CPU 310 executes the forward processing FWD and the backward processing BWD before executing the Ring-Allreduce for evaluation illustrated in FIG. 4. Next, in step S20, the host CPU 310 executes the Ring-Allreduce for evaluation illustrated in FIG. 4. For example, the host CPU 310 executes the Ring-Allreduce illustrated in FIGs. 6 to 18, and determines whether or not the number of processes may be reduced. The training in steps S18 and S20 is an example of training including a determination of superiority by using the plurality of processes P0 to P3.

Next, in step S22, in a case where the host CPU 310 determines that the DNN may be improved up to a predetermined recognition accuracy even if the number of processes is reduced, step S24 is executed. In a case where the number of processes is reduced or in a case where it is difficult to improve the DNN to a predetermined recognition accuracy, the host CPU 310 executes step S26. In step S24, the host CPU 310 reduces the number of processes based on the determination in step S20, and executes step S26.

In step S26, the host CPU 310 executes the forward processing FWD and the backward processing BWD by using the number of processes P determined in the processing in steps S20, S22, and S24. Next, in step S28, as in step S12, the host CPU 310 executes the normal Ring-Allreduce in which pieces of weight gradient data are aggregated between all the processes P. Therefore, it is possible to shorten a time desirable for the Ring-Allreduce, as compared with the Ring-Allreduce for evaluation that is executed in step S20.

Next, in step S30, the host CPU 310 executes the update processing UP to update the weight using the weight gradient data averaged between the processes P in step S28. The training from step S26 to step S30 is an example of subsequent training that does not include a determination of superiority that is executed with the reduced number of processes, in a case where it is determined that the number of processes may be reduced by the determination of superiority in step S22. In a case where the training in step S26 and subsequent steps is executed with the reduced number of processes, it is possible to reduce power consumption of the server 100.

Next, in step S32, the host CPU 310 determines whether or not a recognition accuracy is equal to or higher than a predetermined accuracy. In a case where the recognition accuracy is equal to or higher than the predetermined accuracy, the host CPU 310 terminates the training illustrated in FIG. 19. In a case where the recognition accuracy is less than the predetermined accuracy, the host CPU 310 executes step S34. In step S34, the host CPU 310 determines whether or not the number of epochs reaches an upper limit.

In a case where the number of epochs reaches the upper limit, the host CPU 310 terminates the operation illustrated in FIG. 19. In a case where the number of epochs does not reach the upper limit, the host CPU 310 returns to step S26, and executes the forward processing FWD and the backward processing BWD for the next iteration by using the weight updated in step S30.

As described above, in this embodiment, since an average of the pieces of weight gradient data of the number of the plurality of processes may be calculated by one Allreduce, it is possible to shorten a training time and improve training efficiency, as compared with the comparative example on the lower side in FIG. 2. In other words, for example, superiority of the recognition accuracy in a case where the number of processes that execute training is changed may be determined by executing the aggregation processing 1 time.

During the Ring-Allreduce of the weight gradient data, by comparing the weight gradient data for which aggregation is completed with the weight gradient data during the aggregation, it is possible to determine superiority of training for each process P. By holding information indicating the determined superiority of training in the flag regions PG2 and PG3 as a flag, it is possible to execute the Ring-Allreduce in which the determination results of the superiority of the training are aggregated.

An agreement on "True" may be acquired between the plurality of processes P by executing the logical operation for obtaining the minimum value by the Ring-Allreduce of the flags. Alternatively, the agreement on "True" may be acquired between the plurality of processes P by executing the logical operation for obtaining the maximum value by the Ring-Allreduce of the flags.

By executing normal Ring-Allreduce in which the flags are not aggregated in the flag regions PG2 and PG3 before training in which Ring-Allreduce for evaluation is executed, the number of steps of the Ring-Allreduce may be reduced, and the training time may be shortened. By reducing the number of processes that execute training and executing subsequent training, it is possible to reduce power while reducing hardware resources to be used for the training.

As specifically described above, features and advantages of the embodiments are clarified. This is intended to cover the features and advantages of the embodiments as described above without departing from the spirit and scope of the claims. An ordinary skilled person in the art in the technical field may easily conceive any improvements or modifications. Therefore, there is no intention to limit the scope of the embodiment having the inventive aspect to those described above and it is also possible to rely on appropriate improvements and equivalents included in the range disclosed in the embodiments.

## Claims

1. An arithmetic processing apparatus comprising:
one or more memories;
arithmetic units; and
one or more processors coupled to the one or more memories and the arithmetic units, configured to
execute a training of a deep neural network by arithmetic units in parallel by allocating a plurality of processes to the arithmetic units,
aggregate a plurality of variable update information that are used respectively used for updating a plurality of variables of the deep neural network and are obtained by the training by each of the plurality of processes, between the plurality of processes for each of the plurality of variables, and
determine whether superior or not the training by a certain number of processes that is less than the number of processes of the plurality of processes is, based on first variable update information that is variable update information aggregated between the plurality of processes and second variable update information that is variable update information during the aggregating.

2. The arithmetic processing apparatus according to claim 1, wherein the one or more processors is further configured to:
determine, in each of the plurality of processes, whether superior or not the training for each variable is, based on the first variable update information corresponding to one of the plurality of variables and the second variable update information corresponding to one of the plurality of variables, and
determine whether superior or not the training is based on results that the training is superior or not for each variable.

3. The arithmetic processing apparatus according to claim 2, wherein the one or more processors is further configured to:
allocate flags that hold the results as logical values to the plurality of processes, and
perform a logical operation on the logical values.

4. The arithmetic processing apparatus according to claim 3, wherein the one or more processors is further configured to:
allocate a logical value 1 to a flag out of the flags when a result out of the results is superior,
allocate a logical value 0 to the flag when the result is not superior, and
determine that the training is superior when a minimum value of the flags is the logical value 1.

5. The arithmetic processing apparatus according to claim 3, wherein the one or more processors is further configured to:
allocate a logical value 0 to a flag out of the flags when a result out of the results is superior,
allocate a logical value 1 to the flag when the result is not superior, and
determine that the training is superior when a maximum value of the flags is the logical value 0.

6. The arithmetic processing apparatus according to any one of claims 1 to 5, wherein the one or more processors is further configured to:
execute training not including the determining whether superior or not the training is, by using the plurality of processes, a certain number of times, and
execute a subsequent training with not including the determining whether superior or not when a recognition accuracy of the training not including the determining is superior.

7. An arithmetic processing method for a computer to execute a process comprising:
executing a training of a deep neural network by arithmetic units in parallel by allocating a plurality of processes to the arithmetic units;
aggregating a plurality of variable update information that are used respectively used for updating a plurality of variables of the deep neural network and are obtained by the training by each of the plurality of processes, between the plurality of processes for each of the plurality of variables; and
determining whether superior or not the training by a certain number of processes that is less than the number of processes of the plurality of processes is, based on first variable update information that is variable update information aggregated between the plurality of processes and second variable update information that is variable update information during the aggregating.

8. The arithmetic processing method according to claim 7, wherein the process further comprising:
determining, in each of the plurality of processes, whether superior or not the training for each variable is, based on the first variable update information corresponding to one of the plurality of variables and the second variable update information corresponding to one of the plurality of variables; and
determining whether superior or not the training is based on results that the training is superior or not for each variable.

9. The arithmetic processing method according to claim 8, wherein the process further comprising:
allocating flags that hold the results as logical values to the plurality of processes; and
performing a logical operation on the logical values.

10. The arithmetic processing method according to claim 9, wherein the process further comprising:
allocating a logical value 1 to a flag out of the flags when a result out of the results is superior;
allocating a logical value 0 to the flag when the result is not superior; and
determining that the training is superior when a minimum value of the flags is the logical value 1.

11. The arithmetic processing method according to claim 9, wherein the process further comprising:
allocating a logical value 0 to a flag out of the flags when a result out of the results is superior;
allocating a logical value 1 to the flag when the result is not superior; and
determining that the training is superior when a maximum value of the flags is the logical value 0.

12. The arithmetic processing method according to claim any one of claims 7 to 11, wherein the process further comprising:
executing training not including the determining whether superior or not the training is, by using the plurality of processes, a certain number of times; and
executing a subsequent training with not including the determining whether superior or not when a recognition accuracy of the training not including the determining is superior.

13. An arithmetic processing program that causes at least one computer to execute a process, the process comprising:
executing a training of a deep neural network by arithmetic units in parallel by allocating a plurality of processes to the arithmetic units,
aggregating a plurality of variable update information that are used respectively used for updating a plurality of variables of the deep neural network and are obtained by the training by each of the plurality of processes, between the plurality of processes for each of the plurality of variables, and
determining whether superior or not the training by a certain number of processes that is less than the number of processes of the plurality of processes is, based on first variable update information that is variable update information aggregated between the plurality of processes and second variable update information that is variable update information during the aggregating.
